# EUROPÄISCHE PATENTANMELDUNG

(11) **EP 4 592 594 A1**
(43) Veröffentlichungstag der Anmeldung: **30.07.2025**
(21) Anmeldenummer: 25153092.9
(22) Anmeldetag: 21.01.2025
(51) Int. Cl.: F23D 14/02, F23D 14/46, F23L 1/00, F16L 9/21

(54) **SCHALLDÄMPFER FÜR EINE LUFTZUFUHR EINES HEIZGERÄTES UND HEIZGERÄT**

(30) Priorität: 26.01.2024 DE 102024102286
(71) Anmelder: Vaillant GmbH, 42859 Remscheid NRW (DE)
(72) Erfinder: Chaillou, Tony, 44980 Sainte Luce sur Loire (FR); Lemagnen, Thomas, 44360 St Etienne de M (FR); Guen, Patrice, 44240 La chapelle sur Erdre (FR)
(74) Vertreter: Popp, Carsten

(57) **Zusammenfassung**

Vorgeschlagen wird ein Schalldämpfer (19) zur Anordnung in einer Luftzufuhr (4) eines vormischenden Gasheizgerätes (1). Dieser weist mindestens zwei konzentrisch zueinander und zumindest teilweise überlappend angeordnete Rohrstücke (28, 29) auf, die einen Strömungsweg (23) zumindest in einer ersten axialen Richtung (24) des Schalldämpfers (19), eine anschließende Umlenkung (25) und eine anschlie-ßende Strömung in einer zweiten axialen Richtung (26) bewirken. Zudem wird ein Heizgerät (1) vorgeschlagen, umfassend einen derartigen Schalldämpfer (19) angeordnet innerhalb eines Gehäuses (18) des Heizgerätes (1).

## Beschreibung

Die Erfindung betrifft einen Schalldämpfer für eine Luftzufuhr eines Heizgerätes sowie ein Heizgerät.

Heizgeräte zur Versorgung von Gebäuden mit Heizwärme und Warmwasser sind zu einer Vielzahl aus dem Stand der Technik bekannt. Dabei gerät zunehmend auch eine kompakte Bauform der Heizgeräte in den Fokus der Entwicklung, um notwendige Stellfläche zu minimieren und eine Installation auch in beengten Bereichen oder kleinen Wohneinheiten zu ermöglichen. So können Brennwert- Gasheizgeräte zur Versorgung eines Gebäudes häufig wandhängend ausgeführt werden.

Die Luftzuführung umfasst bei derartigen Heizgeräten in der Regel einen Ansaugstutzen, der eine Geräuschentwicklung verhindern und eine stabile Verbrennung sicherstellen kann. Die Anforderungen an eine Luftzuführung sind in der Vergangenheit aufgrund wachsender Modulationsverhältnisse von Heizgeräten erheblich gestiegen. So müssen hierzu sehr geringe als auch hohe Masseströme Verbrennungsluft geräuscharm bzw. -frei und stabil in das Heizgerät eingeleitet werden. Hierzu kann ein Ansaugstutzen eingesetzt werden, der nachteilig unter bestimmten Umständen eine erhebliche Länge aufweisen muss. Dies kann dazu führen, dass dieser schwer in ein kompaktes Gehäuse eines Heizgerätes zu integrieren ist bzw. das Gehäuse vergrößert werden muss.

In der DE 20 2007 011 361 U1 wird ein Schalldämpfer für ein Heizgerät vorgeschlagen, der an einem T-Stück in einem kombinierten Zuluft- und Abgasrohr anzuordnen ist. Nachteilig hat der Schalldämpfer ein großes Bauvolumen und der vorgesehene Einbauort kann bei einer Installation in Wohnräumen als optisch störend empfunden werden. Ein ähnlicher Schalldämpfer zum Einbau in ein gegenströmendes Luft-Abgassystem wird in der DE 202 17 758 U1 vorgestellt.

Es ist daher Aufgabe der Erfindung, die mit Bezug auf den Stand der Technik geschilderten Probleme zumindest teilweise zu lindern oder zu lösen. Insbesondere soll ein Schalldämpfer für ein Heizgerät als auch ein Heizgerät angegeben werden, die eine kompakte Bauform sowie einen sicheren und komfortablen Betrieb des Heizgerätes ermöglichen. Weiter ist wünschenswert, dass eine einfache nachträgliche Ausrüstung bestehender Heizgeräte mit der Erfindung möglich ist und insbesondere auch nur geringer technischer Änderungen bedarf.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Schalldämpfer zur Anordnung in einer Luftzuführung eines vormischenden Gasheizgerätes bei. Der Schalldämpfer hat mindestens zwei konzentrisch zueinander und zumindest teilweise überlappend angeordnete Rohrstücke, die einen Strömungsweg für Luft zumindest in einer ersten axialen Richtung des Schalldämpfers, eine anschließende Umlenkung und eine anschließende Strömung in einer zweiten axialen Richtung bildet.

Der Schalldämpfer umfasst ggf. mindestens zwei konzentrisch zueinander angeordnete Rohrstücke, die eine Strömung in axialer Richtung des Schalldämpfers und eine Umkehrung der Strömungsrichtung verbunden mit einer Minderung des Radius bewirkt.

Das Heizgerät kann der Versorgung eines Gebäudes mit Heizungswärme und/ oder Warmwasser dienen und als wandhängend oder stehend anzuordnen sein. Insbesondere kann das Heizgerät eine Wärmeleistung von bis zu 50 Kilowatt erbringen. Bei dem Heizgerät kann es sich insbesondere um ein wandhängendes Heizgerät handeln. Das Heizgerät kann insbesondere mit einem kombinierten Anschluss für Luftzuführung und Abgasabführung ausgestattet sein.

Das Heizgerät kann über eine Luftzufuhr einen Massestrom Verbrennungsluft mittels einer Fördereinrichtung ansaugen, dem ein, einem vorgegebenen Verbrennungsluftverhältnis, auch als Lambda oder Luftzahl bezeichnet, entsprechender Massestrom Brenngas zugesetzt wird. Das entstehende Verbrennungsgemisch kann über einen Gemischkanal einem Brenner zugeführt und in einer Brennkammer des Heizgerätes verbrannt werden. Das Ansaugen der Verbrennungsluft kann dabei insbesondere aus einem Gehäuse des Heizgerätes erfolgen.

Das Heizgerät kann eine Zündeinrichtung umfassen, um das Verbrennungsgemisch am Brenner zu entzünden. Die Verbrennungsprodukte können nunmehr über einen Abgaskanal des Heizgerätes einer Abgasanlage des Gebäudes zugeführt werden. Das Heizgerät kann zur Steuerung des Massestromes Brenngas ein Gasventil aufweisen, das in der Regel ein Gassicherheitsventil und ein Gasregelventil umfassen kann. Das Gasregelventil kann dabei insbesondere ein Schrittmotorventil sein, dass einen definierten Massestrom Brenngas einstellen kann. Alternativ kann das Gasregelventil auch einen Massestrom Brenngas entsprechend einem übermittelten Steuerdruck abgeben. Der Steuerdruck kann dabei in einer Venturieinrichtung erfasst werden und ein Maß für den geförderten Massestrom Verbrennungsluft sein. Diese Ausgestaltung wird auch als pneumatischen Gas-Luftverbund bezeichnet. Das Sicherheitsventil soll ein Austreten unverbrannten Wasserstoffs verhindern und wird beispielsweise bei einem Startvorgang des Heizgerätes erst nach dem Anfahren der Fördereinrichtung für eine, für den Startvorgang geeignete, Startleistung freigegeben. Die vorgenannten Komponenten können alle Teile des Heizgerätes selbst sein.

Das Heizgerät kann insbesondere die Brennerleistung an den Bedarf anpassen, was auch als "Modulieren" bezeichnet wird. Hierzu kann bei einem Erkennen eines geänderten Wärmebedarfs, beispielsweise unter Einbeziehung einer Vorlauf- und Rücklauftemperatur eines mit dem Heizgerät verbundenen Heizkreises, ein Regel- und Steuergerät des Heizgerätes eine Leistung des Gebläses des Heizgerätes und damit den Massestrom Verbrennungsluft an den Wärmebedarf anpassen. Gleichzeitig passt eine Regelung den Wasserstoffmassestrom an den sich ändernden Massestrom Verbrennungsluft an.

Die Brennkammer kann einen oder mehrere Wärmetauscher umfassen, die bei der Verbrennung entstehende Wärme auf einen in einem Heizkreis zirkulierenden Wärmeträger oder auch Brauchwasser übertragen können. Bei dem Heizgerät kann es sich insbesondere um ein kondensierendes Heizgerät, auch als Brennwertheizgerät bezeichnet, handeln, bei dem das Abgas auf eine Temperatur abkühlt wird, die eine Nutzung der Kondensationswärme des im Abgas enthaltenen Wasserdampfes ermöglicht.

Das Heizgerät ist zur Verbrennung eines beliebigen Brenngases eingerichtet. Dabei kann es sich um ein fossiles Brenngas wie Erdgas handeln. Das Heizgerät kann auch einem Anteil von (reinem) Wasserstoff von mindestens 80 Prozent aufweisen. Insbesondere kann das Heizgerät zu Verbrennung von einem Brenngas mit einem Anteil von mindestens 90 oder 95 Prozent oder auch weitestgehend reinem Wasserstoff eingerichtet sein.

Der Schalldämpfer umfasst somit mindestens zwei Rohrstücke die zumindest teilweise axial überlappend konzentrisch zu- bzw. umeinander angeordnet sind. Das innere Rohrstück kann dabei mit einem Zuluftrohr des Heizgerätes verbunden werden. Die Rohrstücke bilden dabei einen Strömungsweg aus, bei dem die Verbrennungsluft in einen Zwischenraum zwischen zwei Rohrstücken angesaugt und dann in einer ersten axialen Richtung bis zu einem Ende eines Rohrstückes strömen. Nach einem dort erfolgten Umlenken um weitestgehend 180 Grad kann die Verbrennungsluft in einer zweiten axialen Richtung strömen, die somit weitestgehend entgegengesetzt zu der ersten axialen Richtung ist. Somit kann die Verbrennungsluft in einen äußeren Zwischenraum zwischen zwei Rohrstücken in den Schalldämpfer einströmen und mindestens einmal in weitestgehend entgegengesetzte Richtung umgelenkt werden.

Gemäß einer Ausgestaltung können genau zwei Rohrstücke vorgesehen sein. Dabei kann ein Ende des äußeren Rohrstückes verschlossen sein, so dass Verbrennungsluft in den Zwischenraum zwischen äußerem und innerem Rohrstück einströmt und in erster axialer Richtung durch den Zwischenraum strömt und am Ende des äußeren Rohrstückes umgelenkt wird und in das innere Rohrstück strömt. Das innere Rohrstück kann in Verlängerung eines Zuluftrohres mit diesem verbunden sein, so dass nach dem Durchströmen des inneren Rohrstückes die Verbrennungsluft in das Zuluftrohr strömen kann.

Gemäß einer Ausgestaltung können drei Rohrstücke vorgesehen sein, wobei Verbrennungsluft in den äußeren gebildeten Zwischenraum einströmen kann, in den innen benachbarten Zwischenraum umgelenkt werden und diesen durchströmen um anschließend in das innere Rohrstück umgelenkt zu werden und einem Zuluftrohr des Heizgerätes zugeführt zu werden.

Durch die Anzahl der konzentrisch zu- bzw. umeinander angeordneten Rohrstücke kann die Anzahl der Umlenkungen und die Anzahl der in einer axialen Richtung zu durchströmenden Zwischenräume festgelegt werden. Durch Auswahl der Größe bzw. der Querschnittsfläche der Rohrstücke kann dabei der zur Verfügung stehende Strömungsquerschnitt festgelegt werden. Dabei kann insbesondere der Strömungsquerschnitt für jeden Zwischenraum separat festgelegt werden. Auch kann durch die Länge der Rohrstücke eine Länge des Strömungsweges des Schalldämpfers eingestellt und damit auf ein konkretes Heizgerät abgestimmt werden.

Gemäß einer Ausgestaltung kann die Querschnittsfläche der Rohrstücke eine beliebige Form haben, insbesondere jedoch eine kreisrunde Querschnittsfläche.

Gemäß einer Ausgestaltung kann der Schalldämpfer aus folgenden Materialien gefertigt sein, bzw. diese umfassen: Polypropylen (PP), Acrylnitril-Butadien-Styrol-Copolymer (ABS), Polyamid (PA), Polycarbonat (PC) und/ oder Ethylen-Propylen-Dien-Kautschuk (EPDM).

Nach einem weiteren Aspekt der Erfindung wird ein Heizgerät vorgeschlagen, aufweisend einen hier vorgeschlagenen Schalldämpfer in bzw. an einer Luftzuführung des Heizgerätes.

Das Heizgerät weist zumindest eine Fördereinrichtung auf, mit der ein Massestrom Verbrennungsluft durch eine Luftzufuhr ansaugt werden kann. Dem Massestrom Verbrennungsluft (strömend entlang einer Verbrennungsluftleitung) kann ein Massestrom Brenngas zugesetzt bzw. beigemischt werden (strömend entlang einer Brenngasleitung). Das Gemisch kann entlang eines Gemischkanals bis hin zum Brenner gefördert werden, in eine Brennkammer austreten und verbrennen,

Der Schalldämpfer kann dabei insbesondere innerhalb eines Gehäuses des Heizgerätes in Durchströmungsrichtung des Heizgerätes gesehen, am Anfang eines Zuluftrohres angeordnet sein. Der Schalldämpfer kann somit dazu eingerichtet sein, aus dem inneren des Gehäuses des Heizgerätes Verbrennungsluft anzusaugen.

Das Heizgerät kann insbesondere über einen kombinierten Zuluft-Abgas-Anschluss verfügen, über den Verbrennungsluft in das Gehäuse gelangen kann.

Die im Zusammenhang mit dem Schalldämpfer erörterten Details, Merkmale und vorteilhaften Ausgestaltungen können entsprechend auch bei dem hier vorgestellten Heizgerät auftreten und umgekehrt. Insoweit wird auf die dortigen Ausführungen zur näheren Charakterisierung der Merkmale vollumfänglich Bezug genommen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Hier werden somit ein Schalldämpfer sowie ein Heizgerät angegeben, welche die mit Bezug auf den Stand der Technik geschilderten Probleme zumindest teilweise lösen. Insbesondere tragen der Schalldämpfer und das Heizgerät zumindest dazu bei, eine besonders kompakte Form eines Schalldämpfers zu verwirklichen der einen sicheren und komfortablen Betrieb des Heizgerätes im gesamten Modulationsbereich ermöglicht und sehr gut in ein Gehäuse eines Heizgerätes integriert werden kann. Zudem kann bei dem hier vorgestellten Schalldämpfer der Verlauf des Strömungsquerschnittes über die Länge hervorragend eingestellt werden und problemlos auf ein konkretes Heizgerät angepasst werden.

Der Schalldämpfer ist zudem einfach und mit geringen Aufwendungen herstellbar und kann auch an bestehenden Heizgeräten problemlos nachgerüstet werden.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein hier vorgeschlagenes Heizgerät,
- Fig. 2:: eine Ansicht der Luftzuführung des Heizgerätes,
- Fig. 3 a) und b):: Ansichten eines hier vorgeschlagenen Schalldämpfers, und
- Fig. 4 a) und b):: Ansichten einer alternativen Ausgestaltung eines hier vorgeschlagenen Schalldämpfers.

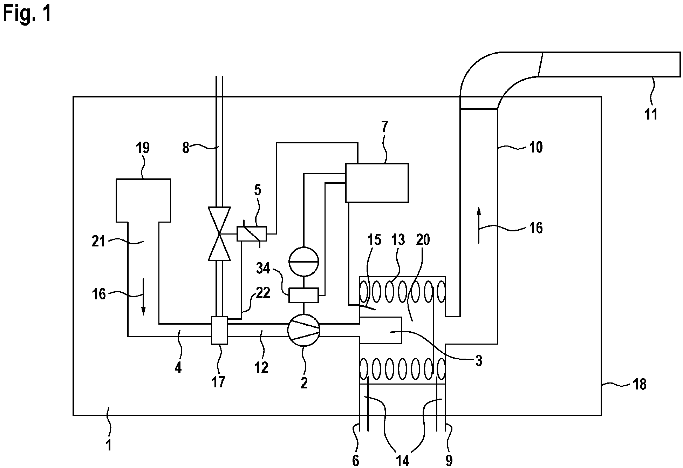

Fig. 1 zeigt beispielhaft und schematisch ein hier vorgeschlagenes Heizgerät 1, das von einem Gehäuse 18 umgeben ist. Das Heizgerät 1 kann einen, zumindest teilweise in einer Brennkammer 20 angeordneten Brenner 3 umfassen. Über eine Luftzufuhr 4 kann Verbrennungsluft in einer Durchströmungsrichtung 16 mittels einer Fördereinrichtung 2, die hier als Gebläse ausgebildet ist, aus der Umgebung angesaugt werden. In der Durchströmungsrichtung 16 gesehen kann am Anfang der Luftzufuhr 4 ein hier vorgeschlagener Schalldämpfer 19 vorgesehen sein, der mit einem Zuluftrohr 21 verbunden sein kann. Das Gebläse 2 kann einen Elektromotor als Antrieb aufweisen, der mit einer Drehzahlreglung 34 verbunden sein kann, die mittels eines pulsweitenmodulierten (PWM-) Signals eine Drehzahl der Fördereinrichtung 2 regeln kann. Ein Gasventil 5 kann dem angesaugten Massestrom Verbrennungsluft Brenngas aus einer Brenngaszufuhr 8 zusetzen und ein Sicherheitsventil sowie ein Brenngasregelventil zur Steuerung des zuzusetzenden Massestromes Brenngas umfassen. Das Gasventil 5 kann über eine Steuerleitung 22 mit einer in der Luftzufuhr 4 angeordneten Drosseleinrichtung 17 (beispielsweise einer Venturidüse) verbunden sein. Das erzeugte Verbrennungsgemisch aus Brenngas und Verbrennungsluft kann über einen Gemischkanal 12 zu dem Brenner 3 strömen und dort von einer Zündeinrichtung entzündet werden. Bei der Verbrennung entstehende Wärme kann mittels eines Wärmetauschers 13 auf einen Wärmeträger eines Heizkreises 14, umfassend einen Vorlauf 6 und einen Rücklauf 9, übertragen werden. Bei der Verbrennung in der Brennkammer 20 entstehende Verbrennungsprodukte können über einen, im Gehäuse 18 angeordneten, Abgaskanal 10 einer Abgasanlage 11 zugeführt werden. Die Abgasanlage 11 kann Teil eines Luft-Abgassystems sein, bei dem zwei Rohrleitungen konzentrisch geführt sind, wobei ein inneres Rohr das Abgas und ein äußeres Rohr die Zuluft führen kann, die in das Gehäuse 18 des Heizgerätes 1 eingeleitet werden kann.

Das hier gezeigte Heizgerät 1 kann eine (Vorrichtung zur) Flammenüberwachung 15 aufweisen, beispielhaft eine Elektrode zur lonisationsstrommessung oder auch ein UV- (Ultraviolett-) Sensor. Alternativ oder zusätzlich kann ein anderer Sensor, z. B. ein thermischer, optischer, akustischer, chemischer Sensor vorgesehen sein, der die Funktion der Flammenüberwachung 15 erfüllt.

Ein Regel- und Steuergerät 7 kann zur Regelung des Heizgerätes 1 eingerichtet sein. Hierfür kann dieses beispielsweise mit der Drehzahlreglung 34, der Fördereinrichtung 2, dem Gasventil 5 und der Flammenüberwachung 15 elektrisch verbunden sein.

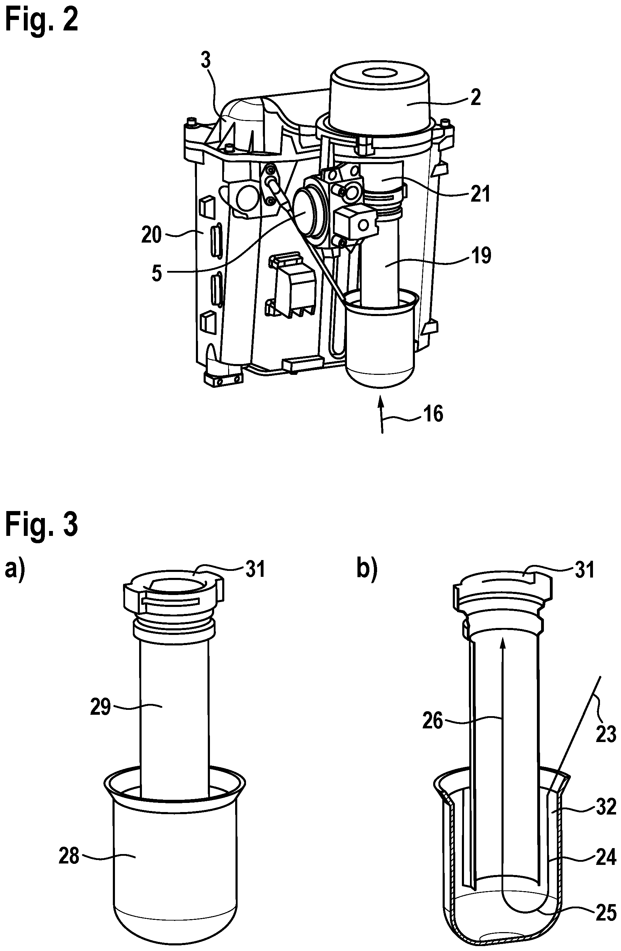

Fig. 2 zeigt im Detail eine mögliche kompakte Ausgestaltung von Komponenten des Heizgerätes 1 im Inneren des Gehäuses 18. Gezeigt ist der Schalldämpfer 19, der mit einem Zuluftrohr 21 des Heizgerätes 1 verbunden sein kann, dem sich in der Durchströmungsrichtung 16 die Fördereinrichtung 2 anschließt. Im Bereich des Zuluftrohres 21 kann das Gasventil 5 dem Massestrom Verbrennungsluft im Zuluftrohr 21 Brenngas zusetzen. Anschließend kann das Verbrennungsgemisch dem Brenner 3 zugeführt und in der Brennkammer 20 verbrannt werden.

Fig. 3 a) zeigt eine Ausgestaltung eines Schalldämpfers 19 und Fig. 3 b) eine Schnittdarstellung desselben, die einen Strömungsweg 23 innerhalb des Schalldämpfers 19 ersichtlich macht. Der Schalldämpfer 19 umfasst einen Anschluss 31 zur Verbindung mit dem Zuluftrohr 21. Der in Fig. 3 gezeigte Schalldämpfer 19 hat ein äußeres Rohrstück 28 und ein inneres Rohrstück 29. Bei dem sich ausbildenden Strömungsweg 23 strömt die Verbrennungsluft aus dem Gehäuse 18 zunächst in einen ersten Zwischenraum 32 zwischen äußerem Rohrstück 28 und innerem Rohrstück 29 ein, durchströmt diesen in einer ersten axialen Richtung 24, erfährt eine Umlenkung 25 und strömt in das innere Rohrstück 29 und durchströmt dieses in einer zweiten axialen Richtung 26, die der ersten axialen Richtung 24 entgegengesetzt ist, um dem Zuluftrohr 21 zugeführt zu werden. Hierzu kann ein Ende des äußeren Rohrstückes 28 verschlossen sein, wodurch die Umlenkung 25 des Strömungsweges 23 bewirkt werden kann.

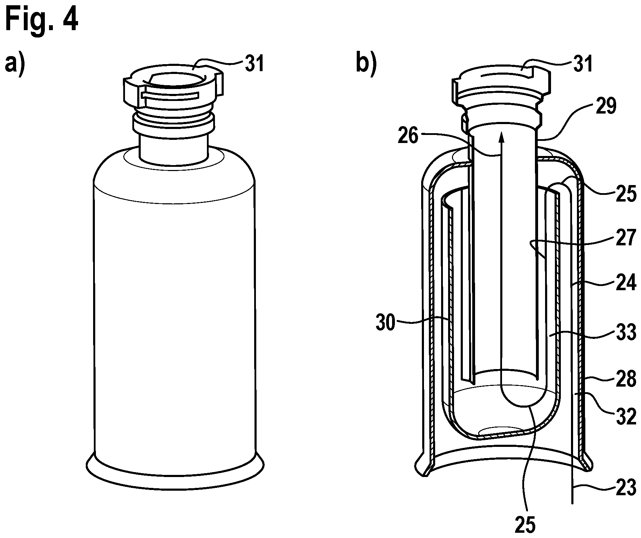

Fig. 4 a) zeigt analog zu Fig. 3, eine alternative Ausgestaltung eines Schalldämpfers 19 und Fig. 4 b) eine Schnittdarstellung desselben, die einen Strömungsweg 23 innerhalb des Schalldämpfers 19 ersichtlich macht. Im Unterschied, zu dem in Fig. 3 gezeigten Schalldämpfer 19, umfasst der in Fig. 4 gezeigte Schalldämpfer 19 ein mittleres Rohrstück 30, das eine zusätzliche Umlenkung 25 sowie einen zweiten Zwischenraum 33, der in einer dritten axialen Richtung 27 durchströmt werden kann, bewirkt. Der sich ausbildende Strömungsweg 23 beginnt somit mit einem Einströmen der Verbrennungsluft in den ersten Zwischenraum 32 zwischen äußerem Rohrstück 28 und mittlerem Rohrstück 30 in der ersten axialen Richtung 24. Nach einer Umlenkung 25 strömt die Verbrennungsluft in den zweiten Zwischenraum 33 zwischen mittlerem Rohrstück 30 und innerem Rohrstück 29 und durchströmt diesen in einer dritten axialen Richtung 27, die entgegengesetzt der ersten axialen Richtung 24 ist. Nach einer weiteren Umlenkung 25 kann die Verbrennungsluft nun in das innere Rohrstück 29 strömen und über den Anschluss 31 dem Zuluftrohr 21 zugeführt werden.

### Bezugszeichenliste

- 1: Heizgerät
- 2: Fördereinrichtung
- 3: Brenner
- 4: Luftzufuhr
- 5: Gasventil
- 6: Vorlauf
- 7: Regel- und Steuergerät
- 8: Brenngaszufuhr
- 9: Rücklauf
- 10: Abgaskanal
- 11: Abgasanlage
- 12: Gemischkanal
- 13: Wärmetauscher
- 14: Heizkreis
- 15: Flammenüberwachung
- 16: Durchströmungsrichtung
- 17: Drosseleinrichtung
- 18: Gehäuse
- 19: Schalldämpfer
- 20: Brennkammer
- 21: Zuluftrohr
- 22: Steuerleitung
- 23: Strömungsweg
- 24: erste axiale Richtung
- 25: Umlenkung
- 26: zweite axiale Richtung
- 27: dritte axiale Richtung
- 28: äußeres Rohrstück
- 29: inneres Rohrstück
- 30: mittleres Rohrstück
- 31: Anschluss
- 32: erster Zwischenraum
- 33: zweiter Zwischenraum
- 34: Drehzahlregelung

## Patentansprüche

1. Schalldämpfer (19) zur Anordnung in einer Luftzufuhr (4) eines vormischenden Gasheizgerätes (1), aufweisend mindestens zwei konzentrisch zueinander und zumindest teilweise überlappend angeordnete Rohrstücke (28, 29), die einen Strömungsweg (23) für Luft zumindest in einer ersten axialen Richtung (24) des Schalldämpfers (19), eine anschließende Umlenkung (25) und eine anschließende Strömung in einer zweiten axialen Richtung (26) bilden.

2. Schalldämpfer (19) nach Anspruch 1, wobei ein einseitig verschlossenes äußeres Rohrstück (28) radial beabstandet um ein inneres Rohrstück (29) angeordnet ist, und das innere Rohrstück (29) dazu eingerichtet ist, mit einem Zuluftrohr (21) eines Heizgerätes (1) verbunden zu werden.

3. Schalldämpfer (19) nach Anspruch 2, wobei radial zwischen äußerem Rohrstück (28) und innerem Rohrstück (29) ein mittleres Rohrstück (30) angeordnet ist, so dass ein Strömungsweg (23) mit zwei Umlenkungen (25) gebildet ist.

4. Heizgerät (1), aufweisend eine Fördereinrichtung (2), die einen Massestrom Verbrennungsluft durch eine Luftzufuhr (4) ansaugt, dem ein Massestrom Brenngas zugesetzt wird und in einem Brenner (3) verbrannt wird, und weiter aufweisend einen Schalldämpfer (19) nach einem der vorangehenden Ansprüche angeordnet in oder an der Luftzufuhr (4) innerhalb eines Gehäuses (18) des Heizgerätes (1).

5. Heizgerät (1) nach Anspruch 4, wobei das Heizgerät (1) ein Brennwert-Gasheizgerät ist.

6. Heizgerät (1) nach Anspruch 4 oder 5, wobei das Heizgerät (1) zur Verbrennung eines Brenngases mit einem Anteil von mindestens 80 Prozent Wasserstoff eingerichtet ist.
